# EUROPEAN PATENT APPLICATION

(11) **EP 1 227 424 A2**
(43) Date of publication of application: **31.07.2002**
(21) Application number: 02250059.9
(22) Date of filing: 07.01.2002
(51) Int. Cl.: G06F 17/60, G09B 5/00

(54) **Teaching system for displaying and storing teaching material**

(30) Priority: 05.01.2001 GB 0100276
(71) Applicant: RESEARCH MACHINES PLC, Milton, Abingdon, Oxon OX14 4SE (GB)
(72) Inventor: Fitzgerald, Lyndon Arthur, Oxon, OX28 1PD (GB); Powell, Myfanwy, Oxford, OX2 6QZ (GB); Owers, James Michael, Abingdon, Oxon OX14 1XN (GB)
(74) Representative: Loveless, Ian Mark

(57) **Abstract**

A teaching system has a display for teaching material and a repository of teaching material. The repository has metadata designating objectives or subobjectives of the teaching material. The teaching material is logically divided such that each part is connected to one or more objectives or subobjectives.

## Description

### FIELD OF THE INVENTION

The present invention relates to a teaching system and in particular to a system which enables content to be displayed on a large screen and presented to students in a classroom environment.

### BACKGROUND OF THE INVENTION

To date, computers have been used in education in three ways. The first, to support the teaching process by enabling the teacher and/or student to access and use discrete resources, for example: to access the Internet, to compile and publish a document, to access a resource such as specific software to evaluate a student's ability. The second way, has been to provide independent learning systems or remote computer assisted teaching systems which allow the student to learn in a one to one situation (i.e. themselves and the computer) on their own. Sometimes there is a teacher interaction, but this is done on a discrete and remote basis. It is the student themselves that is setting the pace and driving the system. The third way is predominantly used as a distance learning tool where a teacher can put together a set of activities and distribute these to individual or group students.

With further developments in computing technology, there are a variety of ways of presenting material to students. These include documents, graphics, the Internet and video clips. However, these different ways of presenting content, whilst of assistance to a teacher, create an extra burden on teachers to plan lessons and adequately record data describing activities that have been undertaken to ensure that the students have been taught all the required subject matter.

We have appreciated that the storage of teaching material and delivery to a display can be integrated with storage of other parameters to support teachers through the whole teaching process. We have therefore analysed the teaching process and devised a system for storing appropriate data and parameters to facilitate whole class, group and individual teaching.

In a broad aspect, the invention resides in a computer based teaching system comprising at least one repository of teaching material and parameters, the system comprising one or more functions for delivering material to screens for any combination of planning, preparation, teaching and learning, assessment and evaluation.

The invention also resides in methods and computer programs for providing and implementing the teaching system. In addition, there are more specific aspects of the invention as follows: first, a teaching system is provided in which teaching material is described by metadata designating an objective or sub-objective. The objective metadata allows manipulation, retrieval and display of appropriate teaching material to teach those objectives. The system also provides for the retrieval of objectives relating to material taught to ensure that all appropriate objectives are met. This is known as a "validate unit" function described later.

In the second aspect, the metadata designating objectives is used to retrieve corresponding text describing teaching materials that can be presented to meet those objectives.

The third aspect of the invention involves storing a further parameter indicating whether or not a particular topic has been adequately covered in a teaching session and retrieving further material depending upon the parameter stored. As an example, the system can store parameters describing whether homework is required and, if so, to retrieve appropriate data for presentation.

The fourth aspect relates to the retrieval and presentation of material to users depending upon user access parameters provided, such as a logon ID or password. The use of dependency upon time and other parameters describing whether a lesson is in progress allows the system to automatically present appropriate material to a student, a group of students, or the whole class.

The fifth aspect relates to storage of a bookmark parameter allowing the presentation of material to be recommenced at a defined point after a break in the presentation.

Lastly, the sixth aspect resides in an assessment function in the teaching system provided to allow for storage of information provided by teachers and/ or students related to objectives to provide feedback. The feedback can be provided by students or teachers.

These and other aspects are defined in the claims to which reference is now directed.

### BRIEF DESCRIPTION OF THE FIGURES

An embodiment of the invention will now be described, by way of an example only, and with reference to the accompanying figures in which:
- Figure 1:: shows the breakdown of a curriculum;
- Figure 2:: shows the teaching and learning cycle adopted by the embodiment of the invention;
- Figure 3:: shows the key functional units of the embodiment;
- Figure 4:: shows the overall logical design of a database embodying the invention;
- Figure 5:: shows the main metadata elements stored in the database of Figure 4;
- Figure 6:: shows the creation of materials and metadata;
- Figure 7:: shows how changes may be made to materials and metadata within schools;
- Figure 8:: shows the "validate unit" function of the first aspect of the invention;
- Figure 9:: shows the retrieval of resources according to the second aspect of the invention;
- Figure 10:: shows lesson delivery, including the bookmark parameter of the fifth aspect;
- Figure 11:: shows user logons and homework activity according to the third and fourth aspects;
- Figure 12:: shows various feedback loops; and
- Figure 13:: shows assessment according to the sixth aspect.

### DETAILED DESCRIPTION OF A PREFERRED EMBODIMENT

The embodiment of the invention is a computer based teaching system which allows storage, manipulation and presentation of data in new ways to facilitate teaching. The system could be used for any subject matter and at any level. The preferred embodiment, though, is for use in schools in teaching numeracy. The system operates across the World Wide Web using known protocols, but can also use other network technology as well as locally stored data.

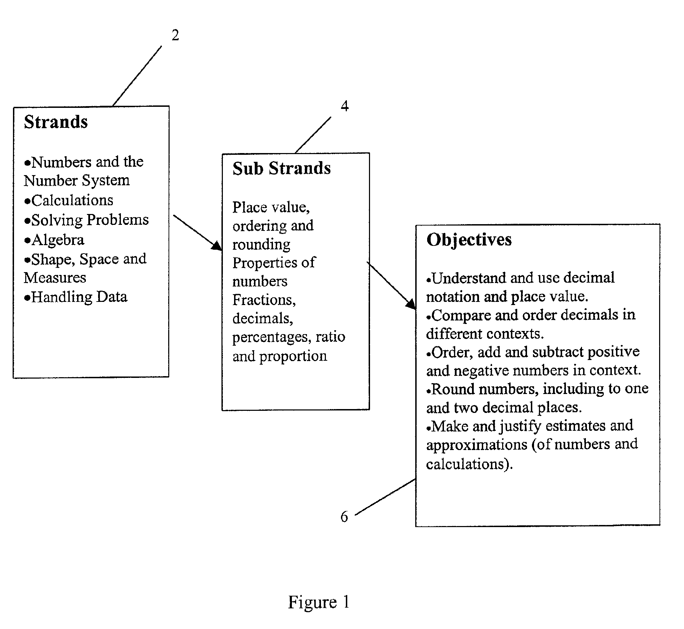

The teaching of numeracy is prescribed in the United Kingdom according to a fixed structure. An example of the structure is shown in Figure 1.

The teaching of numeracy is divided into six strands 2. Strands are a sub-division of the whole field of numeracy to be taught. In turn, strands 2 are divided into sub-strands 4 or topics which define the areas that must be covered in each strand. In turn, these are further sub-divided into objectives 6 which are specific learning points defined in the United Kingdom national numeracy framework. The present embodiment stores data relating to these strands, topics, objectives in addition to resource materials in such a way that they can be manipulated in accordance with the various inventive aspects.

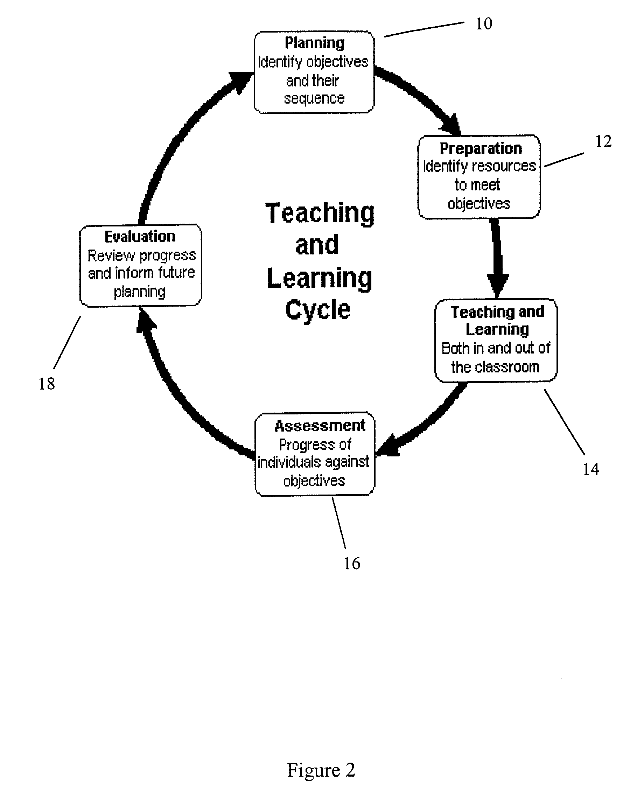

The model devised and adopted for the embodying system embodies the whole teaching and learning cycle as shown in Figure 2. The planning stage 10 involves identifying objectives and their sequence. The preparation stage 12 then allows identification of resources to meet objectives from the repository of resources to facilitate teaching 14 by display of resources on a screen. The system includes an assessment function 16 to allow the progress of individuals or groups to be monitored against the objectives and lastly, an evaluation function 18 to allow review of progress and inform future planning. The logical connection shown by the arrows are facilitated by the storage of data in the whole system.

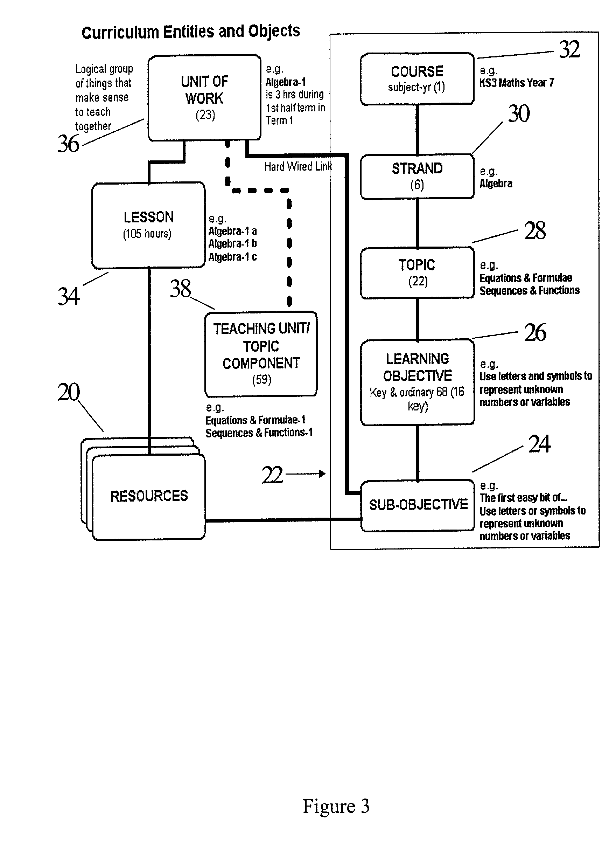

A broad overview of the data storage is shown in Figure 3. Resources are stored in a resource repository 20 which is logically linked to a metadata repository 22. Within the metadata repository information is stored on a course 32, strand 30, topic 28 and objective 26 as previously described. In addition, the embodiment includes the concept of a sub-objective 24 also stored in the metadata repository 22. A sub-objective is a teaching segment in relation to which content is written. The content is stored in the resource repository 20. There is thus a logical link between each sub-objective and one or more resources. Each lesson 34 comprises one or more resources 20. Overall, a unit of work 36 is a logical group of lessons, teaching units 38 and sub-objectives 24 which together form a teaching program.

Overall, the embodiment provides a complete service to support a teacher through the whole teaching learning cycle covering planning, delivery, assessing and evaluating. The embodiment can provide a complete default curriculum course which covers and ensures all the teaching objectives for a year are met. Included in the resource repository are planning notes, classroom management notes, lesson and teaching activity notes, student assessment activities, student notes and homework, as well as teacher lesson reviews to provide feedback. The system is flexible allowing a teacher to follow it or incorporate their own teaching material and resources into it by storing further data in the resource repository and matching these to objectives stored in the metadata store. As a multi-media system, resources can be utilised from video, wordprocessor presentation software and other online resources.

The logical structure of data stored within the system will now be described in detail, followed by a description of the main functional aspects of each of the six inventive aspects identified.

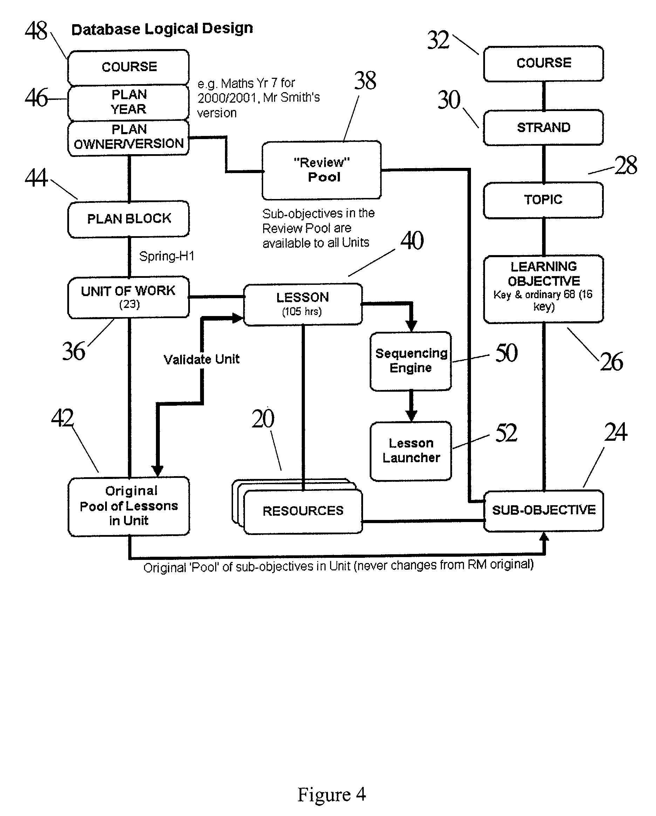

The overall logical design of the database is shown in Figure 4. The teaching resources themselves are stored in a resource repository 20. These can be a variety of different teaching materials, such as databases, spreadsheets, presentation packages, video, text and any other type of media for presentation and display on a screen in a classroom setting. The resource repository 20 can comprise a collection of different materials stored in different physical locations. For example, video and other such data could be stored locally, and HTML pages transmitted over the web.

The resources are logically linked to metadata in a metadata repository 22. The metadata repository comprises data describing sub-objectives 24, objectives 26, topic 28, strands 30 and a course 32, as already discussed. It is at the sub-objective 24 level that the metadata is linked to the resources 20. Thus, for each resource, one or more sub-objectives 24 are identified as being met by teaching using that resource. It should be noted at this point that the terms sub-objectives 24 and objective 26 refer to units of an overall curriculum. Objectives are specific learning points and sub-objectives are the constituent units of objectives for which content can be written. Other terms could be used to describe such units of data.

Lessons 40 comprise resources selected from the resource repository 20 and presented to pupils on a display by means of the sequencing engine 50 and lesson launcher 52. The structure of a lesson is stored as lesson data 40. A lesson can be pre-configured in the system, or configured by a teacher from available resources. As a result, the teacher may wish to check that a lesson they have created successfully meets all required sub-objectives 24. This function is provided by the "validate unit" function described later. In brief, a comparison is made to sub-objectives in an original pool of lessons 42. The database logical design also includes a unit of work 36, plan block 44, plan year 46 and course 48. These represent further data defining the whole curriculum. Lastly, a review pool unit 38 comprises data describing whether given sub-objectives were successfully delivered.

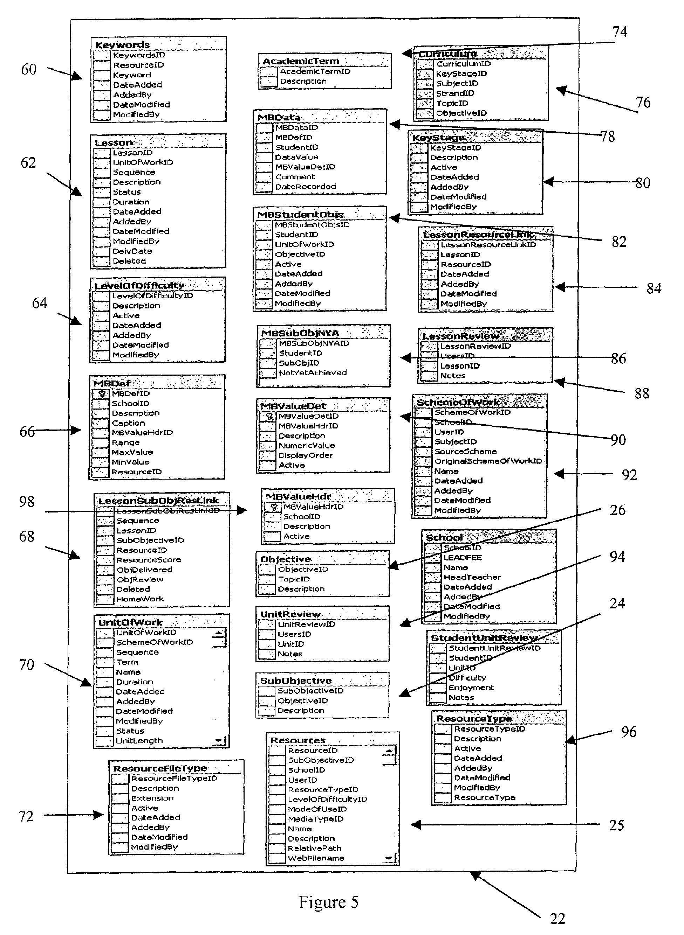

A more detailed view of the metadata repository 22 is shown in Figure 5. In general, the repository 22 comprises a number of store locations, with each store location comprising a number of fields for respective data. Not all of these fields will be described in detail as they relate to peripheral functions. The core metadata comprises sub-objectives 24 and objectives 26. Sub-objectives comprise a sub-objective ID, an objective ID of the parent objective and a description. The objective ID is used to link the sub-objective to the relevant objective and the description is available to users to view. Similarly, objectives include an objective ID, a topic ID and a description. Resources 25 include a resource ID and sub-objective ID of the sub-objectives to which the resource is logically linked. The resource ID allows the respective resource to be retrieved from the resource repository 20. Resource file type 72 and resource type 96 are used to identify the nature of the relevant resource.

Various units of data are included to store information regarding the curriculum and students: Curriculum 76, KeyStage 78, AcademicTerm 74, MBStudentObjs 82, MBSubObjNYA 86, MBVALUEDet 90, SchemeOfWork 92 and MBValueHdr 98 are all administrative data for general purpose use. The information relating to lessons is stored as LessonUnit 62, LevelOfDifficulty 64, LessonSubObjResLink 68 and UnitOfWork 70. These contain fields which logically link the unit of work to a relevant lesson and the lesson itself to appropriate resources and the sequence in which they are to be presented.

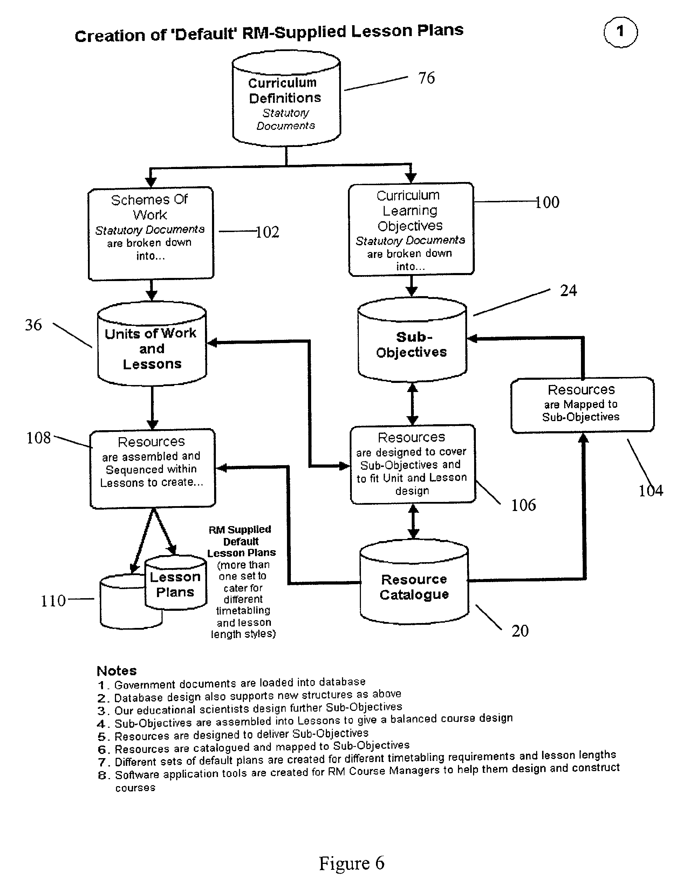

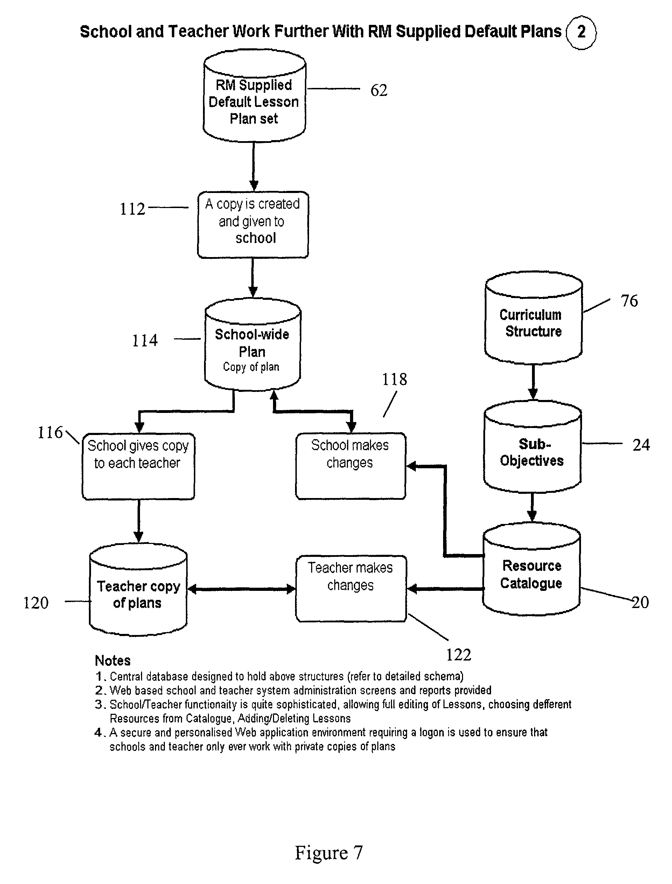

The creation of lesson plans and use of lesson plans is shown in Figures 6 and 7. The curriculum definitions data 76 is broken down at step 100 into sub-objective 24. Similarly, schemes of work 102 are broken down into units of work and lessons 36. Resources are designed at step 106 to cover the relevant sub-objectives and are stored in a repository 20. The resources are mapped onto the sub-objectives at step 104 by placing appropriate fields in the data stores shown in Figure 5. The resources are then assembled and sequenced using the sequence field in the lesson unit 62 at step 108 to store lesson plans 110. A set of lesson plans incorporating the resource materials and targeting specific sub-objectives are thereby created. The use of these lesson plans is shown in Figure 7.

A default lesson plan set 62 is taken from the lesson plan store 110 and these are distributed to schools at step 112. These plans can be copied throughout the school at step 114 and copies distributed to each teacher at step 116 to store in the teacher's own plan repository 120. Using data from the curricular structure 76, sub-objectives 24 and resource catalogue describing all resources available in the repository 20, either the teacher can make changes at step 122 or the school can make changes. These are then stored in the teacher copy plans repository 120 or the school-wide plan 114. As a result of the operations shown in Figures 6 and 7, default lesson plans supplied with the system are created, lesson plans for use on a school-wide basis are created and/or lesson plans particular to each teacher are created all based on the available resources and sub-objectives. This analysis and storage of data forms the core of the system allowing lessons to be presented, reviewed and analysed in various ways.

An inexperienced teacher, a teacher taking over someone else's class for a short period, or a teacher without sufficient time to plan, can use the system as it stands to follow through the default lessons confident that they are meeting all curriculum teaching objectives. This is because the default lesson plans are designed to meet the objectives. Teachers can simply click on a "lesson delivery" button, and the system will automatically load up the current teaching unit with a complete set of activities, including classroom management, teaching and student activities. These are all loaded from the resource repository 20 and metadata store 22. At the end of the lesson, the teacher simply clicks on lesson complete and the system will move on to the next lesson.

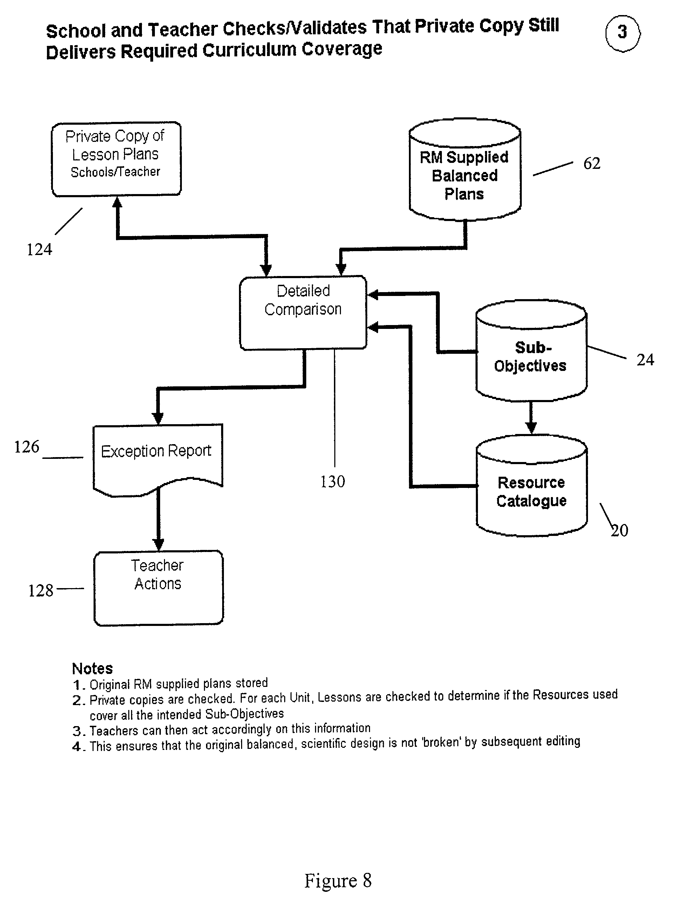

The more experienced teacher, or teacher knowledgeable or used to working with the system, however, can change the system through a lesson planner and edit facility. This involves the first aspect of the invention known as "validate unit" shown in Figure 8.

The available resources in resource repository 20, sub-objectives 24 and supplied lesson plans are analysed along with the teacher's own lesson plan 124 by a comparison unit 130. In order to ensure that the curriculum teaching objectives are still being met by a teacher's own lesson plan, the "validate unit" button initiates the comparison unit 130 and the system thereby analyses the teacher's own teaching material against the curriculum objectives and flags up any areas of discrepancy. The teacher is then presented with an opportunity to match these areas of discrepancies to one or more resources at step 128 to ensure that the lesson meets those objectives. The activities are then added to the lesson.

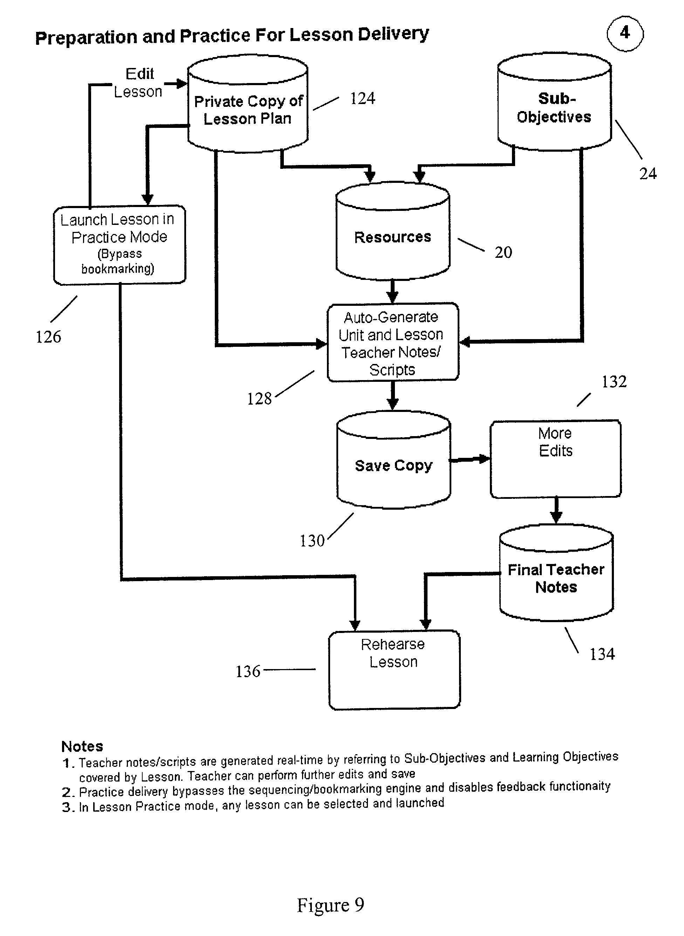

To facilitate this process, the second aspect of the invention can be used, as shown in Figure 9. The private lesson plan 124 can be viewed and edited at step 126 to change the order of teaching the curriculum, swapping lessons, deleting or inserting material, substituting activities, sub-objective or even putting in new material. The large range of resources makes the system very suitable to all learning styles and teaching approaches. These are selected from available resources 20 mapped to appropriate sub-objectives 24. The pertinent feature of the second aspect of the invention is the generation of lesson teacher notes and scripts at steps 128. This works by analysing each resource 20 and extracting therefrom associated notes on the content of each resource. Because the resources are separate logical items linked to sub-objectives, the notes can be extracted from each resource and compiled to produce a set of notes for the whole lesson. A copy of the lesson notes is stored at step 130. The notes are stored as a standard word processing document allowing further edits to be made at step 132 before storage of the final teacher notes at step 134. The automatic production of support notes for any lesson designed on the system is a considerable advantage to teachers saving time whilst also allowing individual customisation of the teacher notes.

The system provides a preview button to allow the teacher to view any of the activities they may wish to include in a given lesson. If the activity is selected, it is automatically inserted into the lesson by storing an appropriate flag in the lesson unit 62 of the metadata repository 22 (Figure 5). The teacher can then rehearse the lesson at step 136 and the system will present the materials in the selected order. Any further changes can be "validated" using the function described in relation to Figure 8 and the lesson saved into the teacher's own copy of lesson plans 120 for presentation to a class.

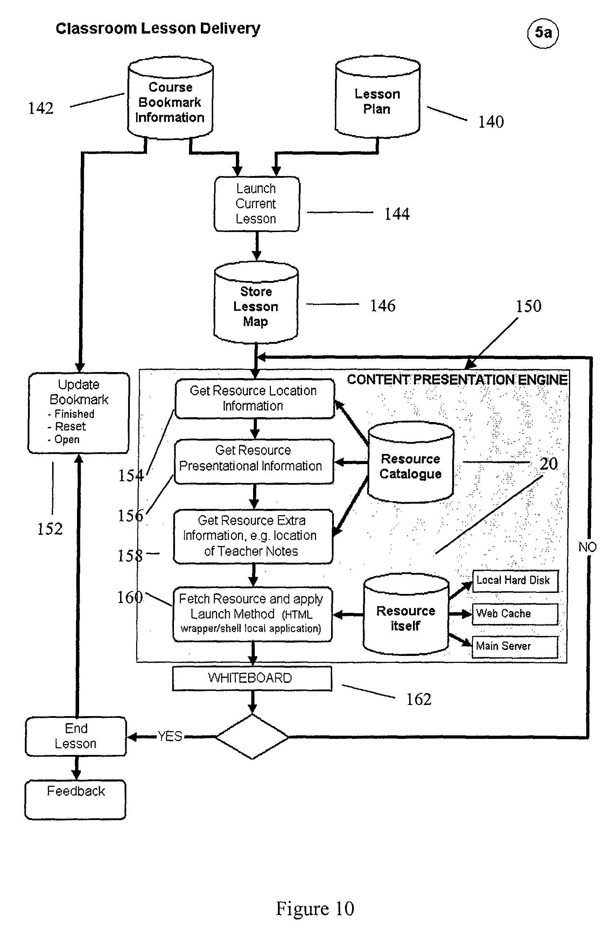

The delivery of a lesson is shown in Figure 10. The core function in delivering a lesson is provided by the content presentation engine 150. This operates on the resource catalogue and resource itself stored in the resource repository 20 and extracts the location of the resource 154 the resource presentation information 156 any extra information such as the teacher notes 158 and finally, extracts resource itself 160 in an appropriate manner from the resource repository which may be on a local hard disk, web cache or on a main server. The resource is then presented to an appropriate display, here a whiteboard 162. The information from which the lesson is constructed is stored in the lesson plan 140, which may be one of the default plans 62 or a teacher's own plan 124, as previously described. The teacher selects to launch the lesson at step 144 and a lesson map is stored at 146.

The fifth aspect of the invention is also shown in Figure 10. As part of the teaching process, a bookmark 142 is stored indicating the position reached in a given lesson. This is part of the flexibility of the whole system. By bookmarking the teacher's progress through a lesson and through a course, each time that teacher logs on to the system, it automatically knows the point the teacher has reached in the teaching curriculum. In addition, if a lesson is interrupted in some way, the teacher can simply click on reset lesson and the system will automatically load it up next time for the lesson to be completed at the point at which the lesson was left.

When work commences with a new scheme with a the bookmark in the default starting position, it will point to the first Lesson in the first Unit. At the end of a Lesson, the user indicates that the Lesson has been "Completed" and this moves the Bookmark to the next available Lesson which is then displayed by the system. It is also possible if the user wishes to change the position of the Bookmark outside its current area of operation using a Change progress tool. This may be required if a teacher wants to revise a topic covered in a previous lesson or to skip a Unit or one or more lessons. Using the Change Progress tool a user can move to a different Unit or move to a different Lesson 7.

The Bookmark parameter is therefore flexible and allows a combination of automatic and manual bookmarking. The bookmark moves automatically as a lesson is progressed.

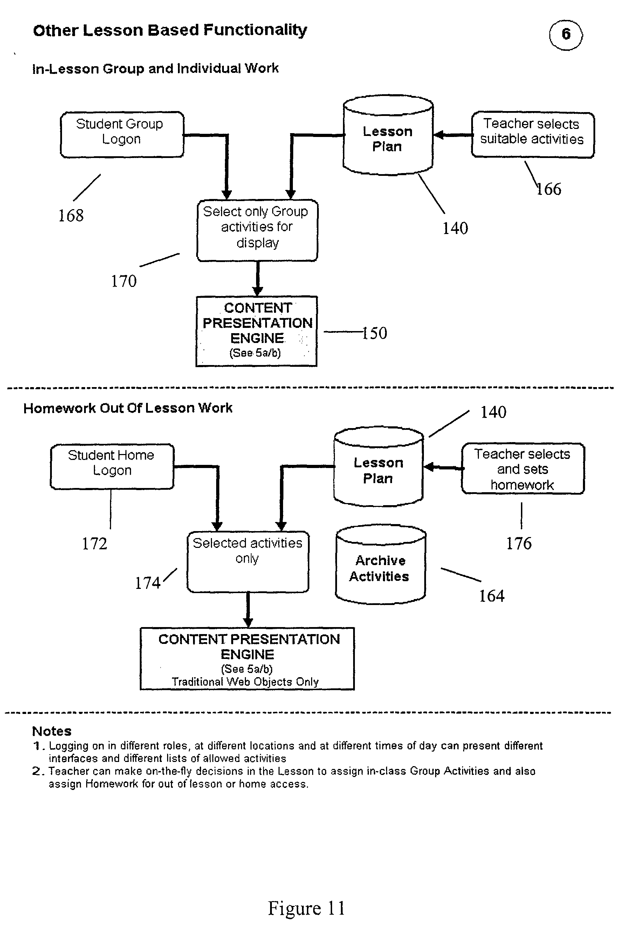

The third and fourth aspects of the invention are shown in Figure 11. A student can logon to the system in two ways: student group logon 168 or student home logon 172. When logging on through the group logon, only group activities are selected for display at step 170 as defined by the teacher selecting the activities at step 166 which are then stored as lesson plan 140. The activities are presented to the student through the content presentation engine 150 previously described. When logging on using a student home logon 172, only activities from a lesson plan 140 generated from teacher selected homework 176 are presented. The homework activity is set by a teacher either through "student administration" to edit student records and set homework against given students, or by clicking on a homework button during a lesson presentation to automatically post given activities and materials as homework.

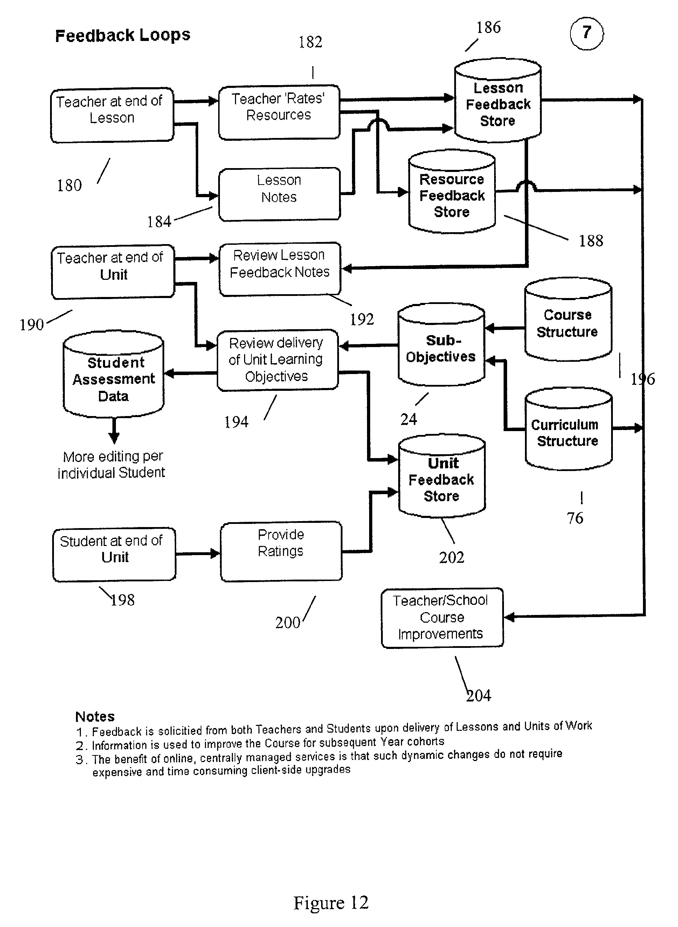

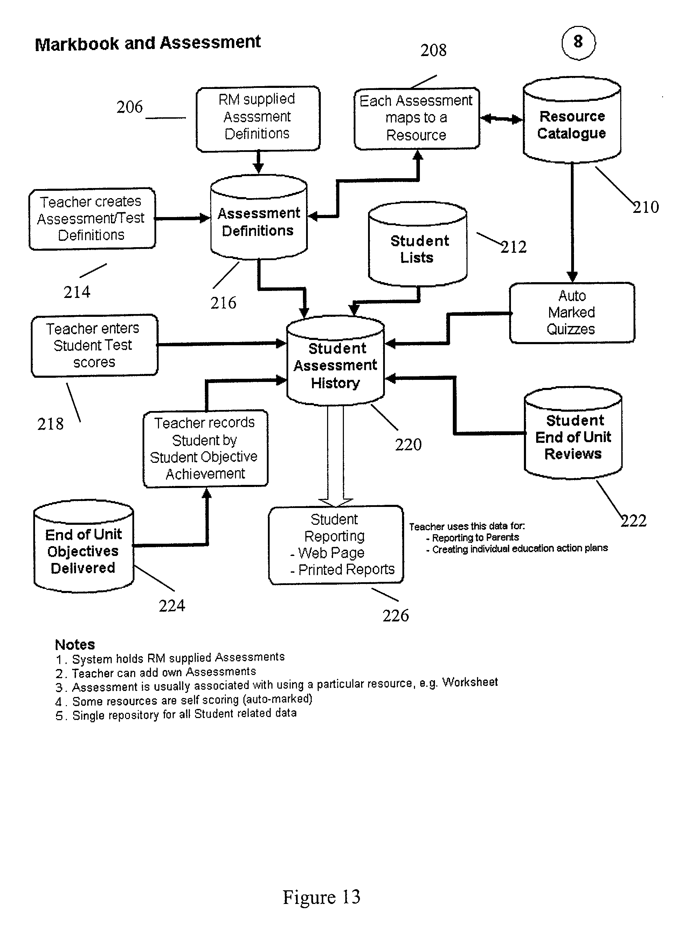

Figures 12 and 13 show various feedback possibilities to review and change lessons as a result of teaching success and to assess student progress.

At the end of each lesson 180, a teacher has the option of creating further lesson notes 184 and rating the resources used 182. These are stored in a lesson feedback store 186 and resource feedback store 188. This information is then used by the teacher and/or school to improve the course. At the end of each unit, where the teacher has the option at step 190 of reviewing the lesson and feedback notes previously stored at step 192 and reviewing delivery of unit learning objectives at 194 based on the course structure and some objectives 24. The result of this review is stored in the unit feedback store 202. Similarly, students provide feedback at 198 by providing ratings 200 to store in the feedback store 202. The benefit of the system is that information is stored and reported so that improvements can be made to future courses.

The sixth aspect is particularly shown in Figure 13. Once a lesson has been completed, a teacher presses a lesson complete button which moves the bookmark on as previously described in relation to Figure 10. The teacher can then go to the review and feedback function and assess each lesson and activity and whether the teaching objectives have been met for the class. Indicating that the objectives have been met will automatically update a student administration system to create a record for each student. This service be used for a whole class, group or individual student. The teacher can then use the markbook and student administration function to edit records for each student, for example, recording against some students if further work is required. To use this function, a teacher first creates assessment and test definitions 214 which are stored in an assessment definitions store 216. Similarly, standard assessment definitions 206 are also provided. Each assessment maps on to a given resource 208 from the resource catalogue 210 of the resource repository 20. The assessment definitions 216, student lists 212, student reviews 222 all feed into a student assessment history 220. In addition, a teacher can enter student test scores 218 and by declaring that objectives have been met at the end of a unit 224 these are automatically posted to the student assessment history. The data thus compiled in the student assessment history 220 is used to produce reports which can be manipulated in a variety of ways 226, such as on printed page or web delivery.

In summary, the whole system provide for excellent teacher support by storing and delivering resources in a flexible and efficient manner. If a teacher chooses to take advantage of the flexibility, the system allows a teacher to verify that objectives are being taught using a validate function. The system can be developed over the World Wide Web allowing content to be up-to-date and for homework semiautomatically posted to a homework page for each individual student. The student can thus access homework through a home PC where they can collect homework, send it back to a teacher, and have the homework marked. The system will alert teachers to the fact that the students have not returned homework. After a lesson has been taught, the non-whole class teaching activities are automatically posted to a student zone including any homework that has been set. The system also provides for the plan, teach, assess and evaluate cycle allowing teachers to provide feedback and evaluate lessons.

## Claims

1. A teaching system for displaying teaching material comprising a repository of teaching material and a repository of metadata designating objectives or sub-objectives for the teaching material, wherein the teaching material is logically divided and each part of the teaching material is logically connected to one or more of the objectives or sub-objectives.

2. A teaching system according to claim 1, further comprising a comparison function for extracting sub-objectives logically connected to teaching material for a lesson plan and determining whether a given set of sub-objectives are provided by the lesson plan.

3. A teaching system according to claim 1 or 2, further comprising text associated with the logically divided teaching material, and a script generation function for extracting text associated with teaching material designated as part of a lesson plan to create a script for that lesson.

4. A teaching system comprising a repository of teaching material and a repository of metadata designating the status of the material, wherein the teaching material is logically divided and each part of the teaching material is logically connected to the metadata and the metadata designates whether each part of the teaching material should be provided to a student or group of students.

5. A teaching system comprising a repository of teaching material and a content presentation engine for presenting selected parts of the teaching material, wherein the presentation engine is configured to present teaching material to each user of the system depending upon a logon ID and/ or the time of day.

6. A teaching system comprising a repository of teaching material and a bookmark parameter store for storing a parameter indicating a point at which teachings should resume when next using the system.

7. A teaching system comprising a repository of teaching material and an assessment repository, the system including an assessment function to store an assessment in the assessment repository in relation to given parts of the teaching material for a student or group of students.

8. A method a delivering teaching material in a teaching system, the system comprising a repository of teaching material and a repository of metadata designating objectives or sub-objectives for the teaching material, wherein the teaching material is logically divided and each part of the teaching material is logically connected to one or more of the objectives or sub-objectives, the method comprising extracting sub-objectives logically connected to teaching material for a lesson plan and determining whether a given set of sub-objectives are provided by the lesson plan.

9. A method a delivering teaching material in a teaching system, the system comprising a repository of teaching material and a repository of metadata designating objectives or sub-objectives for the teaching material, wherein the teaching material is logically divided and each part of the teaching material is logically connected to one or more of the objectives or sub-objectives, further comprising text associated with the logically divided teaching material, the method comprising extracting text associated with teaching material designated as part of a lesson plan to thereby create a script for that lesson.

10. A method a delivering teaching material in a teaching system, the system comprising a repository of teaching material and a repository of metadata designating the status of the material, wherein the teaching material is logically divided and each part of the teaching material is logically connected to the metadata and the metadata designates whether each part of the teaching material should be provided to a student or group of students, the method comprising selectively presenting the material to a student or group of students depending upon the metadata.

11. A method a delivering teaching material in a teaching system, the system comprising a repository of teaching material and a content presentation engine for presenting selected parts of the teaching material, the method comprising presenting teaching material to each user of the system depending upon a logon ID and/or the time of day.

12. A method a delivering teaching material in a teaching system, the system comprising a repository of teaching material and a bookmark parameter store for storing a parameter indicating a point at which teachings should resume when next using the system, the method comprising presenting the material indicated by the bookmark parameter.

13. A method a delivering teaching material in a teaching system, the system comprising a repository of teaching material and an assessment repository, the method comprising storing an assessment in the assessment repository in relation to given parts of the teaching material for a student or group of students.

14. A computer readable storage media having stored thereon computer program code which when executed on a computer undertakes method according to any of claims 8 to 13.

15. A teaching system according to claim 6, wherein the system is configurable to automatically store a bookmark parameter which denotes a changing position as a lesson is progressed.

16. A teaching system according to claim 6 or 15, wherein the bookmark parameter is manually configurable by a user.
